# EUROPÄISCHE PATENTSCHRIFT

(11) **EP 1 061 273 B1**
(45) Veröffentlichungstag und Bekanntmachung des Hinweises auf die Patenterteilung: **12.04.2006**
(21) Anmeldenummer: 00112194.6
(22) Anmeldetag: 07.06.2000
(51) Int. Cl.: F16B 13/08, F16L 3/13, H02G 3/30

(54) **Steckdübelsystem**
Dowel system
Système de cheville

(30) Priorität: 08.06.1999 DE 19926060; 15.12.1999 DE 19960387
(43) Veröffentlichungstag der Anmeldung: 20.12.2000
(73) Patentinhaber: Gräwe, Bernd, 45701 Herten (DE)
(72) Erfinder: Gräwe, Bernd, 45701 Herten (DE)
(74) Vertreter: Valentin, Ekkehard

(56) Entgegenhaltungen:
- EP-A- 0 845 626
- DE-A- 4 123 754
- DE-A- 4 312 340
- DE-U- 8 807 139
- FR-A- 2 279 010
- US-A- 3 844 194
- US-A- 4 262 394

## Beschreibung

Die Erfindung betrifft ein Steckdübelsystem zur ortsfesten Halterung von Körpern an einem Untergrund, umfassend eine Haltevorrichtung sowie einen die Haltevorrichtung befestigenden, einstückig aus Kunststoff hergestellten Steckdübel, der in ein Bohrloch einer Wandung einsteckbar und drehfest selbstklemmend ist. In diesem Zusammenhang sind unter dem Begriff Körper jegliche Teile zu verstehen, die an einem Untergrund befestigt werden sollen, beispielsweise Langformteile wie Kabel, Rohre, Installationsleitungen, Kleinkörper wie Türstopper, Badarmaturen, wie Handtuchhalter.

Aus der DE 41 23 754 A1 ist ein Halteelement für Installationsarbeiten beschrieben, die aus einem Schellenkörper, einem am Fuß des Schellenkörpers gehalterten Befestigungsmittel mit Schaft und Kopf sowie einem in eine Gebäudewand einschlagbaren Dübel besteht. Die Kabelschelle weist im Fußbereich eine Lochung auf, die vom Schaft eines Befestigungsmittels, beispielsweise einer Schlagschraube, durchgreifbar ist. Zur Befestigung wird der Dübel in ein Bohrloch eingetrieben und anschließend die Kabelschelle mit der den Fuß durchgreifenden Schlagschraube so auf den Dübel aufgesetzt, daß die Schlagschraube in den Dübel eingetrieben werden kann. In der Endlage stützt sich der Kopf der Schlagschraube am Fuß des Schellenkörpers ab, während der Fuß des Schellenkörpers durch die Schlagschraube an die Gebäudewand angepreßt wird.

Neben diesen herkömmlichen Dübeln sind selbstklemmende Dübel bekannt, die in ein Bohrloch einer Wandung einsteckbar und selbstklemmend in dem Bohrloch festlegbar sind. Die Selbstklemmung entsteht durch eine gegen die Einsteckrichtung aufgebrachte Zugwirkung. Es ist auch bekannt, derartige Dübel zur Befestigung von Haltevorrichtungen einzusetzen. In der DE 43 12 340 C2 ist beispielsweise ein selbstklemmender Dübel beschrieben mit einem rastbefestigten oder angeformten Flansch als Kopfende, der Bestandteil einer Klemmschelle für Installationsmaterial ist. Bei der Ausführungsform des angeformten Flansches wird dieser Dübel zur Befestigung eines entsprechend gelochten Profilstücks benutzt.

Bei derartigen Lösungen ist von Nachteil, daß diese Systeme aufgrund des für die Dübelverspannung notwendigen axialen Zuges den zu befestigenden Gegenstand nicht kraftschlüssig gegen die Bohrlochwandung spannen. Wird zum Beispiel eine separate Schelle mittels eines bekannten Steckdübels im Bohrloch befestigt, kommt es aufgrund des Zugschlupfes zu einem Zwischenraum zwischen Wandung und Schellenfuß mit einem damit unerwünschten, nicht festen Sitz der Schelle.

Durch die DE 88 07 139 U1 ist ein Befestigungselement aus Kunststoff bekannt. Dieses besteht aus einem Kopf und einem Schaft, der an seiner Außenseite mit einer Rippenanordnung nach Art eines Dübels versehen ist. Der Kopf ist mit einem Gewinde versehen, welches mit einer Kabel- oder Rohrhalterung verbunden wird. Zwischen dem Kopf und dem Schaft ist ein umlaufender Kragen vorgesehen, der den für das Bohrloch vorgesehenen Durchmesser überragt. Beim Beispiel des Aufdrehens einer Rohrschelle auf das Kopfgewinde weist die Rohrschelle eine entsprechende Ausnehmung für diesen Kragen auf.

Beim Befestigungsvorgang wird in einem ersten Schritt das Befestigungselement aus Kunststoff, d.h. der sogenannte Kunststoffnagel, in ein Bohrloch eingeschlagen, bis der Nagel mit seinem Kragen bündig auf dem Untergrund zur Anlage kommt. Das macht zur Montage zwingend ein Werkzeug bzw. Einschlagwerkzeug erforderlich. In einem zweiten Schritt wird die Rohrschelle aufgedreht. Durch den Einschlagvorgang in das Bohrloch wird der Kunststoffnagel durch Verformung der Rippenanordnung verankert. Hierbei hat die Rippenanordnung aber nicht die Spannwirkung, wie sie die Erfindung vorschlägt. Im Gegensatz zur Erfindung muß sogar vermieden werden, daß der einmal in das Bohrloch eingeschlagene Kunststoffnagel axial bewegt wird, um das bündige Anliegen des Kragens an den Untergrund und damit das Einschließen von der größenmäßig angepaßten Ausnehmung der Rohrschelle zu gewährleisten. Anderenfalls würde nämlich der Kunststoffnagel durch weiteres Aufdrehen der Rohrschelle aus dem Bohrloch herausgezogen.

Aus der US 3 844 194 A ist bei einer Befestigungsvorrichtung ein selbstklemmender Steckdübel bekannt. Es handelt sich hierbei um einen Metallsteckdübel zum Einsatz als Schwerlastdübel zur Befestigung einer Platte auf einem Untergrund. Für den Effekt zur Selbstklemmung des Steckdübels wird die notwendige Zugkraft durch eine Mutter mittels eines Schraubenschlüssels aufgebracht.

Ausgehend von diesem Stand der Technik liegt der Erfindung die Aufgabe zugrunde, ein System gattungsgemäßer Art zu schaffen, das trotz Einsatz eines selbstklemmenden Steckdübels eine sichere und feste Befestigung der Haltevorrichtung zur ortsfesten Halterung von Körpern, beispielsweise Langformteile wie Kabel oder Rohre, gewährleistet.

Dies Aufgabe wird mittels eines Systems mit den Merkmalen des Anspruchs 1 gelöst. Vorteilhafte Ausgestaltungen sind in den Unteransprüchen offenbart.

Zur Lösung dieser Aufgabe wird vorgeschlagen, daß die Haltevorrichtung, beispielsweise eine Rohrschelle oder ein Kabelhaltebügel, durch Drehung um die Längsachse des Dübels satt zur Anlage an den Untergrund kommt und gleichzeitig der Steckdübel durch die entgegen der Einsteckrichtung aufgebrachte Zugwirkung verspannbar ist. Aufgrund der Drehbewegung der Haltevorrichtung um die Längsachse des drehfesten Dübels wird diese gegenüber dem Untergrund sicher und fest verspannt und gleichzeitig die für eine feste Haltefunktion des selbstklemmenden Steckdübels notwendige Zugwirkung aufgebracht.

Von Vorteil des erfindungsgemäßen Systems ist insbesondere, daß eine Befestigung und sattes Anliegen der Haltevorrichtungen an dem Untergrund ohne weitere Werkzeuge, wie Schlagmittel, sondern allein durch manuelles Drehen der Haltevorrichtung um die Längsachse des Steckdübels möglich sind. Das System ist insgesamt einfach und unabhängig von weiteren Hilfsmitteln handhabbar.

Nach einer ersten Ausführungsform des erfindungsgemäßen Steckdübelsystems ist der Steckdübel an seinem Kopfende mit einem Gewinde und die Haltevorrichtung mit einem entsprechenden Gegengewinde versehen.

Eine vorteilhafte Ausgestaltung der Erfindung sieht vor, daß das Gegengewinde in einer in einem fußseitig vorgesehenen Langloch der Haltevorrichtung angeordneten, verschiebbaren Mutter ausgebildet ist. Die in die Haltevorrichtung montierte Schiebemutter ist im Zusammenspiel mit dem Langloch konstruktiv so ausgelegt, daß sie sich seitwärts (links-rechts) um einige Millimeter innerhalb der Haltevorrichtung bewegen läßt. Die Kombination des Steckdübelsystems mit einer Schiebemutter ermöglicht somit ein Ausrichten der Haltevorrichtung bei einem nicht exakten Bohrloch und damit auch bei Bohrlochabweichungen eine lagegenaue Montage. Dieselbe Wirkung tritt natürlich ein, wenn in Umkehrung der Gewindeverbindung die Schiebemutter mit einem Gewindezapfen ausgebildet und dieser in einen mit einem Innengewinde versehenen Steckdübel eingeschraubt wird.

Es wird in Weiterbildung der Erfindung vorgeschlagen, daß die Mutter mit Ausnehmungen auf komplementären Innenvorsprüngen des Langlochs verrastet ist. Die Schiebemutter läßt sich somit nach dem Einstellen auf die Abweichung eines verlaufenen Bohrloches unverlierbar festlegen, so daß im Anschluß der Steckdübel von unten durch Aufdrehen der Haltevorrichtung in die Mutter der Haltevorrichtung montiert werden kann.

Wenn die Mutter in ihre Einbaulage vorzugsweise gegenüber der Auflagefläche der Haltevorrichtung nach innen zurückversetzt ist, d.h. demgegenüber eine geringere Höhe besitzt, wird erreicht, daß sie sich nicht direkt auf den Untergrund abstützen kann und vielmehr die Haltevorrichtung satt an den Untergrund anpreßbar ist. Es liegt im Rahmen der Möglichkeiten, die Mutter mit einem Teil- oder einem Vollgewinde auszubilden.

Das Gewinde am Dübel kann als Außengewinde in Form eines Gewindezapfens ausgebildet sein. Insbesondere für die Anwendung in größeren Bohrlöchern empfiehlt sich die Ausbildung des Gewindes als Innengewinde, wobei die Haltevorrichtung ein entsprechendes Außengewinde aufweist und in das Innengewinde eingeschraubt wird. In einem solchen Fall kann die Haltevorrichtung bereits unlösbar mit dem zu befestigenden Körper verbunden sein, zum Beispiel zum Montieren eines Türstoppers. Denkbar ist auch, den Dübel an seinem Kopfende mit einer Innenbohrung zu versehen, die Längsrippen aufweist. Die entsprechende Haltevorrichtung in Form einer Schraube schneidet sich selbst in diese Bohrung ein.

Bei der Ausführungsform des Gewindezapfens handelt es sich vorzugsweise um ein Trapezgewinde. Für die Montage wird der Steckdübel mit der Haltevorrichtung vormontiert und in das Bohrloch gesteckt. Durch Drehung der Haltevorrichtung um die Längsachse des Dübels legt sich diese flächig an den Untergrund an, und gleichzeitig wird gegenüber dem Steckdübel die notwendige axiale Zugkraft entgegen der Einsteckrichtung aufgebracht, die diesen im Bohrloch verspannt. Es ist auch denkbar, daß der Steckdübel ohne Vormontage in das Bohrloch eingesetzt und anschließend die Haltevorrichtung aufgedreht wird. Durch die Drehung kommt es ebenfalls zu der vorgeschlagenen gegenseitigen Verspannung.

Insgesamt wird ein Gewinde mit hoher Steigung bevorzugt, um beim Eindrehen der Haltevorrichtung einen schnellen Verbund zu erreichen. Die Gewindetiefe ist groß, vorzugsweise ist der Kerndurchmesser des Gewindes um 40% kleiner im Vergleich zum Nenndurchmesser des Gewindes.

Zudem wird im Zusammenhang mit der Ausführungsform des Dübels mit Gewindezapfen vorgeschlagen, daß der Dübelschaft im Bereich vor dem Gewinde eine Soll-Schwachstelle aufweist, vorzugsweise eine Querschnittsminimierung durch Einbringen einer kreisförmigen Nut. Somit wird ein Überdrehen und eine Zerstörung des Dübelgewindes oder des Gegengewindes der Haltevorrichtung verhindert, indem entweder der querschnittsminimierte Schaft oder die Gewindezähne sich elastisch verformen und somit zu hohe Drehkräfte aufnehmen. Das Gegengewinde in der Haltevorrichtung kann ein zu dem Gewindezapfen des Steckdübels korrespondierendes Gewinde sein. Aus spritztechnischen Gründen besteht das Gegengewinde jedoch vorzugsweise nur aus einem halbkreisförmigen Gewindeabschnitt.

Nach einer zweiten Ausführungsform weist der Steckdübel an seinem Kopfende mindestens zwei Nocken auf, und das Dübeleinführloch der Haltevorrichtung ist als Langloch ausgebildet, so daß sich der Dübel durch Drehung der Haltevorrichtung aus einer in dem Langloch abgesenkten ersten Position in eine durch Bewegung der Nocken auf den Rand der Längsseiten des Langloches angehobene zweite Position bewegt. Eine bevorzugte Ausbildung dieser Lösung ist in Anspruch 11 beschrieben. Durch Drehung der Haltevorrichtung und Bewegung in die angehobene Position wird der Steckdübel entgegen seine Einsteckrichtung gezogen und im Bohrloch verspannt. Gleichzeitig wird die Haltevorrichtung gegen den Untergrund gezogen. Voraussetzung für diese Ausführungsform ist die Ausbildung des Einführloches in der Haltevorrichtung als Langloch bzw. als Loch mit unterschiedlicher Breite zur Länge. Zudem muß gewährleistet sein, daß sich der Steckdübel nicht im Bohrloch mitdreht.

Weitere Einzelheiten und Vorteile der Erfindung ergeben sich aus den weiteren Unteransprüchen und der nachfolgenden Beschreibung. Hierbei zeigen:
- Figur 1: eine Seitenansicht eines Steckdübels des Steckdübelsystems nach einer ersten Ausführungsform mit einem Gewindezapfen;
- Figur 2: eine Seitenansicht eines Steckdübels des Steckdübelsystems nach einer ersten Ausführungsform mit einem Gewindezapfen und geschwächtem Dübelschaft;
- Figur 3: eine Seitenansicht eines Steckdübels des Steckdübelsystems nach einer zweiten Ausführungsform mit einem mit Nocken versehenen Kopfende;
- Figur 4: die Vorderansicht eines Steckdübels nach Figur 3;
- Figur 5: eine Vorderansicht einer Haltevorrichtung des Steckdübelsystems nach der ersten Ausführungsform als Kabelschelle;
- Figur 6: eine Querschnittsansicht des Steckdübelsystems mit Kabelschelle nach Figur 5;
- Figur 7: eine Querschnittsansicht des Steckdübelsystems nach der Figur 6 im vormontierten Zustand;
- Figur 8: eine Querschnittsansicht des Steckdübelsystems nach der Figur 6 im montierten Zustand;
- Figur 9: eine Draufsicht einer Haltevorrichtung des Steckdübelsystems nach einer zweiten Ausführungsform als Kabelbügelhalter mit Dübel;
- Figur 10: eine Seitenansicht des Steckdübelsystems nach Figur 9 im montierten Zustand;
- Figur 11: eine Querschnittsansicht des Steckdübelsystems nach der zweiten Ausführungsform mit einem Kabelbügelhalter in einseitiger Ausführung in abgesenkter Position;
- Figur 12: eine Vorderansicht des Systems nach Figur 11;
- Figur 13: eine Querschnittsansicht des Steckdübelsystems nach der zweiten Ausführungsform mit einem Kabelbügelhalter in einseitiger Ausführung in angehobener Position;
- Figur 14: eine Vorderansicht des Systems nach Figur 13.
- Figur 15: eine gegenüber dem Steckdübelsystem nach den Fig. 1 bis 8 mit einem Langloch ausgebildete Haltevorrichtung, im Querschnitt der Haltevorrichtung gezeigt;
- Figur 16: die Haltevorrichtung nach Fig. 15 in einer teilgeschnittenen Seitenansicht und darunter angeordnetem Steckdübel vor dem Einfügen;
- Figur 17: die Haltevorrichtung nach Fig. 16 in der Draufsicht;
- Figur 18: als Einzelheit der Haltevorrichtung nach Fig. 16 eine in diese zu montierende Mutter, in der Drauf- und in der Vorderansicht gezeigt; und
- Figur 19: die Bauteile der Fig. 16 im montierten Zustand.

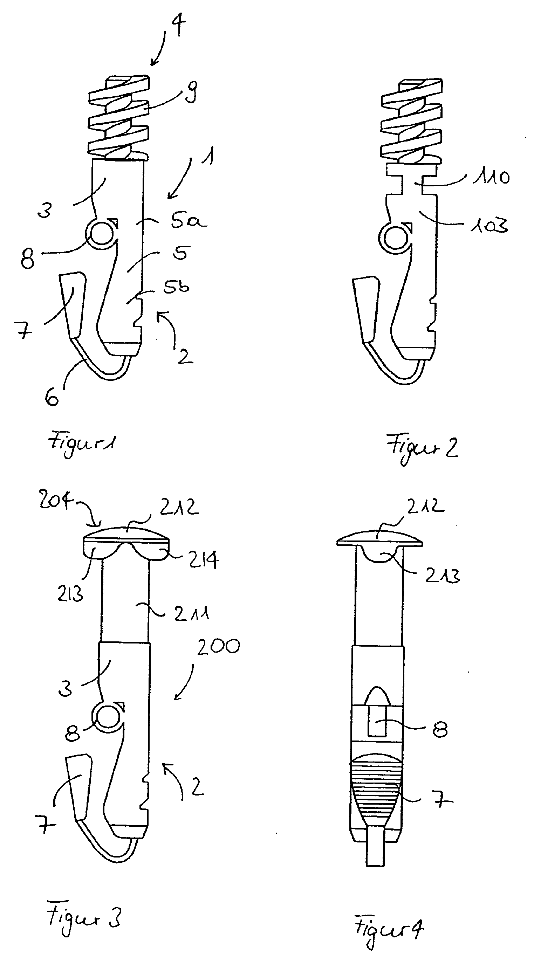

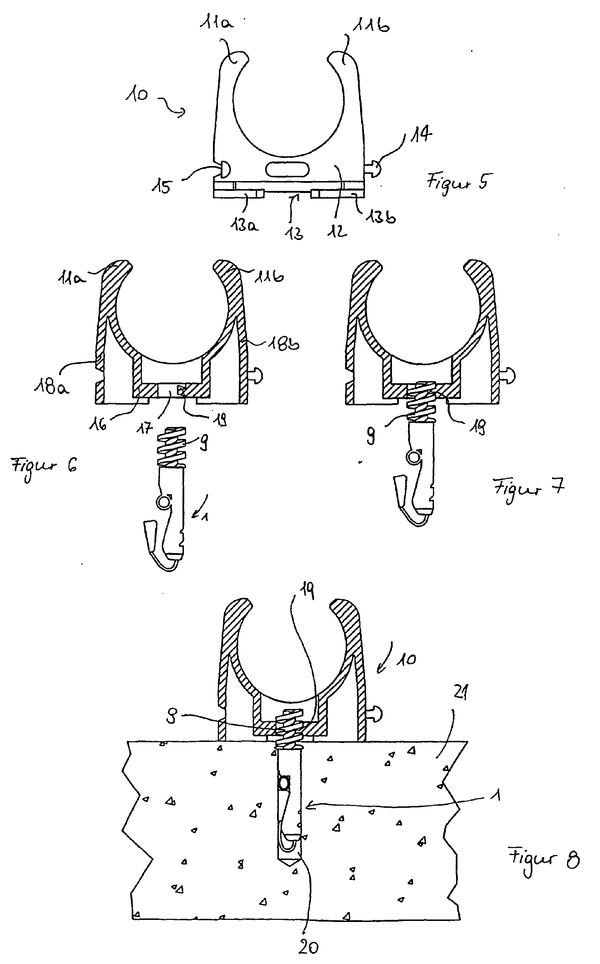

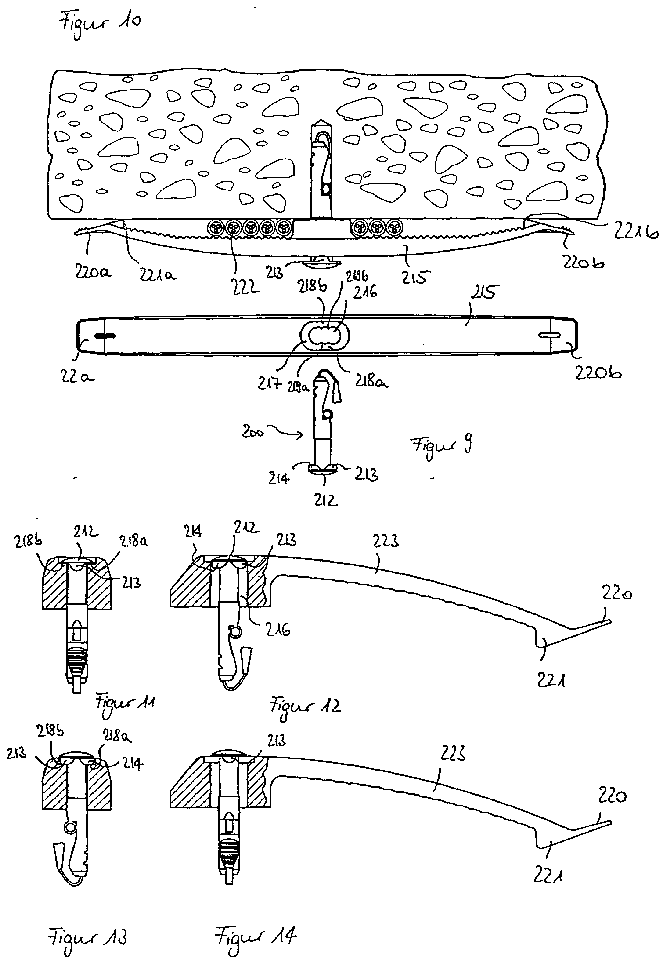

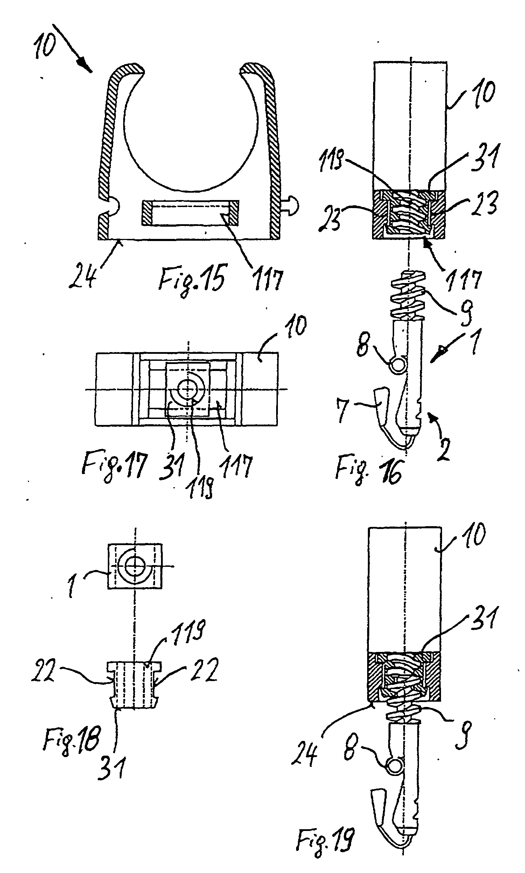

Figur 1 zeigt einen selbstklemmenden Steckdübel 1 eines Steckdübelsystems nach der ersten Ausführungsform, der sich aus einem in das Bohrloch einsteckbaren Dübelendkörper 2, einem Dübelschaft 3 und einem Gewindezapfen 4 als Dübelende zusammensetzt.

Das Prinzip der Selbstklemmung des Steckdübels wird zum Verständnis kurz beschrieben. Der Dübelendkörper 2 besteht aus einem mit dem Dübelschaft 3 einstückig ausgebildeten ersten Keilbereich 5 sowie einem mit dem Keilbereich 5 über einen bandförmigen Materialstreifen 6 verbundenen, korrespondierend ausgebildeten kleineren zweiten Keilbereich 7. Im Auflagezustand bilden der erste und zweite Keilbereich 5, 7 als Dübelende eine annähernd zylindrische Form. Der erste Keilbereich 5 weist einen halsförmigen Teil 5a, der sich von dem Schaft 3 erstreckt, sowie einen konusförmigen Teil 5b auf. Es ist zusätzlich ein Ring 8 aus elastischem Material vorgesehen, der an dem halsförmigen Teil 5a über seine Umfangsfläche befestigt ist. Während beim Einführen des Dübels in das Bohrloch der Gesamtquerschnitt der miteinander korrespondierenden Keilbereiche 5 und 7 gleich dem oder kleiner als der Bohrlochdurchmesser ist, wird beim Angreifen von axialen Auszugskräften dieser Gesamtquerschnitt durch die axiale Verschiebung der Keilflächen zueinander so vergrößert, daß der Steckdübel kraftschlüssig gegen die Bohrlochwandung gepreßt wird. Durch die Ovalisierung und Längung unterstützt der Ring 8 eine Verschiebung der Keilflächen hin zu einem vergrößerten Gesamtquerschnitt und verhindert gleichzeitig als Wegwiderstand die Lösebewegung der Keile. Diese konkrete Ausbildung eines selbstklemmenden Steckdübelendes dient nur als Beispiel. Andere Arten von Steckdübeln sind ebenfalls denkbar.

Der Gewindezapfen 4 ist als Trapezgewinde 9 mit großer Steigung bei großer Gewindetiefe ausgebildet. Während sich die Gewindezwischenräume bzw. die Zähne zur Aufnahme von zu hohen Torsionskräften elastisch verformen können, ist nach einer Weiterentwicklung des Steckdübels der Dübelschaft 103 mit einer zusätzlichen Soll-Schwachstelle in Form einer kreisförmigen Nut 110 versehen (vgl. Figur 2).

Der Dübel 200 eines Systems nach der zweiten Ausführungsform, wie gezeigt in Figur 3, weist ebenfalls einen selbstklemmenden Dübelendkörper 2 auf. Weitere gleiche Bauteile des Dübels sind mit der ersten Ausführungsform entsprechenden Bezugszeichen bezeichnet. Der Dübelende 204 besteht aus einem Schaftbereich 211, der in einem gewölbten Flansch 212 als Dübelkopf mit darunter angeordneten Nocken 213 und 214 endet. Die beiden Nocken 213, 214 weisen einen halbkreisförmigen Querschnitt auf (vgl. Figur 4), der sich jeweils zur Schaftmitte hin verjüngt (vgl. Figur 3). Auf diese Weise dienen die Nocken als optimale Gleitelemente des Dübelendes zur Bewegung zwischen einer abgesenkten und angehobenen Position.

Figur 5 zeigt eine Vorderansicht einer Haltevorrichtung des Steckdübelsystems nach der ersten Ausführungsform als Kabelschelle. Die Kabelschelle 10 ist einstückig aus Kunststoff hergestellt. Sie setzt sich aus zwei Klammern 11 a und 11 b sowie einem Endstück 12 mit Auflagefläche 13 zusammen. Die Auflagefläche wird durch zwei sich gegenüberliegende U-förmige plattenförmige Klammern 13a, 13b gebildet. Ferner ist die Kabelschelle 10 an einer Seite mit einem Vorsprung 14 und an der anderen Seite mit einer korrespondierenden Nut 15 versehen. Auf diese Weise können benachbarte Schellen zu einem Verbund zusammengesteckt werden.

Aus den Querschnitten der Figuren 6 und 7 wird deutlich, daß die Schelle eine Einsteckhülse 16 formt, in der das Einführloch 17 für das Dübelende eingebracht ist. Zwischen der Einsteckhülse 16 und den Randbereichen 18a, 18b ist die Schelle hohl. Das Einführloch 17 ist mit einem halbkreisförmigen Gewindeabschnitt 19 versehen, in den das Dübelgewinde 9 leicht und schnell eindrehbar ist (Figur 7).

Den montierten Zustand dieser ersten Ausführungsform des Steckdübelsystems zeigt Figur 8. Der selbstklemmende Dübel 1 befindet sich drehfest im Bohrloch 20. Durch Drehung der Schelle 10 um den Gewindezapfen 9 des Dübels 1 kommt diese satt zur Anlage an den Untergrund 21, beispielsweise Wände, Böden, Decken und dergleichen, und gleichzeitig erfährt der Dübel 1 die notwendige axiale Auszugskraft. Insgesamt schafft die erste Ausführungsform des Steckdübelsystems die Verspannung nach dem Gewindeprinzip durch Drehung der Haltevorrichtung.

Die zweite Ausführungsform schafft dies mittels eines Abgleitens von Nocken von einem in einem Rundloch abgesenkten Zustand in eine angehobene Position. Die zweite Ausführungsform des vorgeschlagenen Steckdübelsystems wird nach den Figuren 9 bis 14 am Beispiel eines Kabelhalterbügels beschrieben. Derartige Bügel sind in zwei- (Figuren 9 und 10) (215) oder einseitiger (Figuren 12 und 14) (223) Ausführung bekannt. Kabelhalterbügel dienen zur Halterung von einer Vielzahl parallel verlegter Kabel oder dergleichen. Nach Figur 9 ist der Kabelhalterbügel in zweiseitiger Ausführung als konvex gewölbter Flachstab 215 mittig mit einem Langloch 216 zur Aufnahme des Dübels versehen. Um den Randbereich des Langloches 216 herum ist eine Vertiefung 217 in die Oberfläche des Bügelhalters eingeschnitten, deren Tiefe in etwa der Höhe des gewölbten Flansches 212 des Dübelkopfes entspricht. Das Langloch 216 ist an seinen Längsseiten 218a, b mit Riefen 219a, 219b versehen, die so geformt sind, daß der Dübelschaft 211 drehbar mittig im Langloch gehalten wird. Die unterhalb des Flansches 212 am Dübelkopf angeordneten Nocken 213, 214 sind so bemessen, daß der Abstand ihrer äußeren Flächen kleiner oder im wesentlichen passend mit der Länge des Langloches ist. Ihr Abstand ist aber größer als die Breite des Langloches. Der Durchmesser des gewölbten Flansches 212 weist einen gegenüber der Breite des Langloches größeren Nenndurchmesser auf.

Das Funktionsprinzip des Steckdübelsystems nach der zweiten Ausführungsform verdeutlichen die Figuren 11 bis 14. Der Dübel wird durch das Langloch 216 bis zum Anschlag des Kopfes 212 an den Rand der Längsseiten 218a, 218b des Langloches geführt. Die Riefen bewirken eine zentrierte Führung des Dübelkörpers und vergrößern zusätzlich den Randbereich der Längsseiten. In diesem Zustand befinden sich die Nocken in der abgesenkten Position (Figuren 11 und 12). Nach drehfestem Einbringen des Dübels in das Bohrloch wird der Bügel um 90° um den Dübel gedreht. Die Nocken 213, 214 bewegen sich auf die Längsseiten des Randes des Langloches und zwingen den Dübel in eine angehobene Position, Figuren 13 und 14. Hierdurch wird sowohl der Dübel im Bohrloch als auch der Bügel gegenüber dem Untergrund verspannt.

Der Kabelhalterbügel 215 ist mit Anhebeelementen 220a, 220b und Stützfüßen 221a, 221b versehen. Im verspannten Zustand werden die Bügel mittels dieser Elemente 220a, b angehoben und die Kabel 222 unter die Bügel geschoben. Diesen verspannten Endzustand zeigt Figur 10.

Es ist auch denkbar, daß bei der zweiten Ausführungsform des Steckdübelsystems die notwendigen Nocken mittels einer Mutter bewerkstelligt werden, die auf den mit einem Außengewinde versehenen Dübelschaft aufgeschraubt ist. Bei diesem System mit drei Komponenten wird die Mutter in dem Langloch versenkt und zur Verspannung in eine angehobene Position bewegt. Als Haltevorrichtung kommt neben einem Bügel selbstverständlich auch eine Kabelschelle oder andere bekannte Haltevorrichtungen für derartige Langprodukte in Frage.

Damit bei im Untergrund 21 aufgrund von verlaufenden Bohrungen nicht exakt vorliegenden Bohrlöchern 20 ein Ausrichten der Haltevorrichtung 10 möglich ist, ist die in den Fig. 15 bis 19 dargestellte Haltevorrichtung 10 gegenüber der zuvor beschriebenen Ausführungsform (Fig. 1 bis 8) in ihrem fußseitigen Bereich mit einem Langloch 117 versehen. Darin befindet sich eine vormontierte Mutter 31, die mit seitlichen Ausnehmungen 22 (vgl. Fig. 18) auf Innenvorsprüngen 23 des Langlochs 117 angeordnet und darüber in ihrer Endposition verrastbar ist. Die Mutter 31 stellt das Gegengewinde 119 für das Trapezgewinde 9 des Steckdübels 1 bereit.

Nachdem die Mutter 31 durch Verschieben in dem Langloch 117 bei einem verlaufenden Bohrloch entsprechend ausgerichtet wurde (vgl. Fig. 17), wird sie nach demselben Prinzip wie zuvor im Zusammenhang mit den Fig. 1 bis 8 beschrieben mittels der Haltevorrichtung 10 auf den sich drehfest im Bohrloch befindenden, selbstklemmenden Dübel 1 aufgeschraubt bzw. -gedreht. Den Montagezustand des aus der Haltevorrichtung 10, den Steckdübel 1 und der Schiebemutter 31 bestehenden Steckdübelsystems zeigt - unter Vernachlässigung des Untergrundes und des Bohrloches (vgl. hierzu Fig. 8) - die Fig. 19. Die in die Haltevorrichtung 10 montierte Schiebemutter 31 springt in ihrer Einbaulage gegenüber der Auflagefläche 24 der Haltevorrichtung 10 nach innen zurück (vgl. die Fig. 16 und 19), so daß sich nur die Haltevorrichtung 10 satt an den Untergrund pressen kann, nicht jedoch die Mutter.

Die in die Haltevorrichtung 10 integrierte Schiebemutter 31 ermöglicht somit in einfacher Weise ein Ausrichten durch entsprechendes Verschieben in dem Langloch 117 an eine nicht exakte, verlaufene Bohrung, so daß sich aufgrund dieser Ausgleichsmöglichkeit im Abstand hintereinander bzw. nebeneinander montierte Haltevorrichtungen 10 in Flucht bringen lassen.

## Patentansprüche

1. Steckdübelsystem zur ortsfesten Halterung von Körpern an einem Untergrund (21), umfassend eine Haltevorrichtung(10, 215, 223) sowie einen die Haltevorrichtung befestigenden, einstückig aus Kunststoff hergestellten Steckdübel (1, 200), der in ein Bohrloch (20) einsteckbar und drehfest selbstklemmend ist, wobei die Haltevorrichtung (10, 215, 223) durch Drehung um die Längsachse des Steckdübels (1, 200) satt zur Anlage an den Untergrund (21) kommt und sich gleichzeitig der Steckdübel durch die entgegen der Einsteckrichtung aufgebrachte axiale Zugwirkung verspannt, und wobei die Verspannung durch eine geeignete Verbindung zwischen Haltevorrichtung und Steckdübel realisiert wird, welche derart ausgestaltet ist, daß eine Drehung der Haltevorrichtung (10, 215, 223) um die Längsachse des Steckdübels (1, 200) eine Relativbewegung dieser Teile in Längsrichtung des Steckdübels bewirkt.

2. Steckdübelsystem nach Anspruch 1,
**dadurch gekennzeichnet,**
**daß** der Steckdübel an seinem Kopfende mit einem Gewinde und die Haltevorrichtung mit einem entsprechenden Gegengewinde versehen ist.

3. Steckdübelsystem nach Anspruch 2,
**dadurch gekennzeichnet**
**daß** das Gewinde am Kopfende des Steckdübels als Außengewinde (4) und im Fuß der Haltevorrichtung das Gegengewinde (19; 119) ausgebildet ist.

4. Steckdübelsystem nach Anspruch 3,
**dadurch gekennzeichnet,**
**daß** das Gegengewinde (119) in einer in einem fußseitig vorgesehenen Langloch (170) der Haltevorrichtung (10) angeordneten, verschiebbaren Mutter (31) ausgebildet ist.

5. Steckdübelsystem nach Anspruch 4,
**dadurch gekennzeichnet,**
**daß** die Mutter (31) mit Ausnehmungen (22) auf komplementären Innenvorsprüngen (23) des Langlochs (117) verrastet ist.

6. Steckdübelsystem nach Anspruch 4 oder 5,
**dadurch gekennzeichnet,**
**daß** die Mutter (31) in ihrer Einbaulage gegenüber der Auflagefläche (24) der Haltevorrichtung (10) nach innen zurückversetzt ist.

7. Steckdübelsystem nach Anspruch 2,
**dadurch gekennzeichnet,**
**daß** das Gewinde am Kopfende des Steckdübels als Innengewinde ausgebildet ist und die Haltevorrichtung ein entsprechendes Außengewinde als Gegengewinde aufweist.

8. Steckdübelsystem nach Anspruch 1,
**dadurch gekennzeichnet,**
**daß** der Steckdübel an seinem Kopfende eine längs seiner Längsachse verlaufende Innenbohrung mit Längsrippen aufweist.

9. Steckdübelsystem nach Anspruch 3,
**dadurch gekennzeichnet,**
**daß** der Dübelschaft (103) unterhalb des Gewindezapfens mit Außengewinde eine Soll-Schwachstelle (110) aufweist.

10. Steckdübelsystem nach Anspruch 3,
**dadurch gekennzeichnet,**
**daß** das Gegengewinde aus einem halbkreisförmigen Gewindeabschnitt (19) besteht.

11. Steckdübelsystem nach Anspruch 1,
**dadurch gekennzeichnet,**
**daß** der Steckdübel (200) an seinem Kopfende (204) mindestens zwei Nocken (213, 214) aufweist und die Haltevorrichtung (215, 223) mit einem Loch zum Einführen des Dübels versehen ist, das als Langloch (216) ausgebildet ist derart, daß sich der Dübel (200) durch Drehung der Haltevorrichtung aus einer in dem Langloch abgesenkten ersten Position in eine durch Bewegung der Nocken auf den Rand der Längsseiten (218a, b) des Langloches angehobene zweite Position bewegt.

12. Steckdübelsystem nach Anspruch 11,
**dadurch gekennzeichnet,**
**daß** unterhalb des Dübelkopfes die zwei sich gegenüberliegenden Nocken (213, 214) mit halbkreisförmigem Querschnitt ausgebildet sind, deren Längserstreckung kleiner oder im wesentlichen passend mit der Länge des in die Haltevorrichtung eingebrachten Langloches (216) ist, die aber größer ist als die Breite des Langloches,
**daß** der Dübelkopf (212) in Form eines kreisrunden Flansches einen gegenüber der Breite des Langloches größeren Nenndurchmesser aufweist, daß das Langloch (216) über seine Tiefe mit Rippen (219a, b) versehen ist, die so geformt sind, daß der Dübelschaft (211) drehbar mittig im Langloch gehalten wird, so daß beim Einführvorgang des vormontierten Dübels in das Bohrloch dessen Nocken bis zum Anschlag des Kopfes an den Rand der Längsseiten des Langloches versenkt sind, und daß sich bei der Montage die Nocken durch Drehung der Haltevorrichtung, vorzugsweise um 90°, auf den Rand der Längsseiten des Langloches in die angehobene Position bewegen.

13. Steckdübelsystem nach Anspruch 11,
**dadurch gekennzeichnet,**
**daß** zur Bildung der Nocken eine Mutter auf den mit einem Außengewinde versehenen Dübel aufschraubbar ist.

14. Steckdübelsystem nach einem der Ansprüche 2, 3, 9 und 10, umfassend den Steckdübel (1) mit seinem Gewindezapfen als Trapezgewinde sowie die Kabelschelle (10) mit in der Schellenbasis eingebrachten Loch, das den halbkreisförmigen Gewindeabschnitt (19) aufweist, wobei die Kabelschelle mit einer Auflagefläche versehen ist, die aus zwei gegenüberliegenden U-förmigen plattenförmigen Klammern (13a, 13b) besteht.

15. Steckdübelsystem nach Anspruch 11 oder 12, umfassend den Steckdübel (200) sowie den Kabelhalterbügel (215, 223) mit dem mittig oder endseitig eingebrachten Langloch (216), wobei der Kabelhalterbügel mit Stützfüßen (221a,b) und mit Abhebeelementen (220a, b) versehen ist, die spitzwinklig zum Untergrund abstehen, zum Abheben des jeweiligen Bügels im verspannten Zustand und Einführen der Kabel (222).

## Claims

1. A push plug system for fixed retention of elements on a subsurface (21), including a retaining device (10, 215, 223) and a dowel (1, 200) made from a single plastic piece that attaches the retaining device and can be inserted in a borehole (20) so as to be torque-proof and self-securing, wherein the retaining device (10, 215, 223) is brought fully flush against the subsurface (21) by rotation about the longitudinal axis of the dowel (1, 200) and at the same time the dowel is braced by the axial tensile effect exerted counter to the direction of insertion, and wherein the bracing is effected by a suitable connection between the retaining device and the dowel, which connection is designed such that a rotation of the retaining device (10, 215, 223) about the longitudinal axis of the dowel (1, 200) causes a relative movement of these parts in the longitudinal direction of the dowel.

2. The push plug system according to claim 1,
**characterised in that**
the dowel is provided with a thread at the head thereof and the retaining device is provided with a corresponding counter-thread.

3. The push plug system according to claim 2,
**characterised in that**
the thread is conformed at the head of the dowel as an external thread (4) and at the foot of the retaining device as a counter-thread (19; 119).

4. The push plug system according to claim 3,
**characterised in that**
the counter-thread (119) is conformed in a movable nut (31) that is arranged in a slot (170) provided on the foot end of the retaining device (10).

5. The push plug system according to claim 4,
**characterised in that**
the nut (31) is in ratcheted engagement with recesses (22) on complementary internal protrusions (23) of the slot (117).

6. The push plug system according to either of claims 4 or 5,
**characterised in that**
in its fitted position facing the contact surface (24) of the retaining device (10), the nut (31) is displaced backwards towards the interior.

7. The push plug system according to claim 2,
**characterised in that**
the thread is conformed as an inner thread at the head of the dowel and the retaining device has a corresponding outer thread as a counter-thread.

8. The push plug system according to claim 1,
**characterised in that**
the head of the dowel has an inner borehole with longitudinal ribs that extends along the longitudinal axis of the dowel.

9. The push plug system according to claim 3,
**characterised in that**
the shaft of the dowel (103) is furnished with a design weakpoint (110) below the threaded peg with the outer thread.

10. The push plug system according to claim 3,
**characterised in that**
the counter-thread consists of a semicircular thread section (19).

11. The push plug system according to claim 1,
**characterised in that**
the dowel (200) is furnished with at least two cams (213, 214) at the head end (204) thereof and the retaining device (215, 223) is furnished with a hole for inserting the dowel, which hole is configured as a slot (216) in such manner that when the retaining device is rotated the dowel (200) moves from a first position retracted in the slot to a raised, second position due to the movement of the cams on the border of the longitudinal sides (218a, b) of the slot.

12. The push plug system according to claim 11,
**characterised in that**
the two cams (213, 214) arranged opposingly below the dowel head are conformed with semicircular cross section, and the length of which is shorter or essentially matching the length of the slot (216) created in the retaining device, but which is greater than the width of the slot, that the dowel head (212) in the shape of a circular flange has a nominal diameter greater than the width of the slot,
that the slot (216) is furnished with ribs (219a, b) for its entire depth, which are shaped such that the dowel shaft (211) is retained rotatably and centred in the slot, so that when the pre-fitted dowel is introduced into the borehole, the cams thereof are advanced until the head is flush with the edge of the longitudinal sides of the slot, and that during assembly the cams move into the raised position up to the edge of the longitudinal sides of the slot when the retaining device is rotated, preferably through 90°.

13. The push plug system according to claim 11,
**characterised in that**
a nut can be screwed onto the dowel provided with an outer thread in order to form the cams.

14. The push plug system according to claims 2, 3, 9 and 10,
including the dowel (10) with its threaded peg as a trapezoidal thread and the cable clamp (10) with a hole formed in the clamp base, and which has the semicircular threaded section (19), wherein the cable clamp is furnished with a support surface which consists of two opposing, U-shaped, plate-shaped brackets (13a, 13b).

15. The push plug system according to claim 11 or 12,
including the dowel (200) and the cable retaining clip (215, 223) with the slot (216) formed in the middle on one end thereof, wherein the cable retaining clip is furnished with support feet (221a, b) and lifting elements (220a, b), which protrude at an acute angle to the subsurface for lifting the respective clip in the braced condition and introducing the cable (222).

## Revendications

1. Système de cheville pour la fixation stationnaire de corps sur un fond (21), comprenant un dispositif de maintien (10, 215, 223), ainsi qu'une cheville (1, 200) fixant le dispositif de maintien, fabriquée en monocorps en matière plastique, qui peut être insérée dans un alésage (20) et qui est autobloquante de façon solidaire en rotation, le dispositif de maintien (10, 215, 223) venant s'appliquer fixement sur le fond (21), par rotation autour de l'axe longitudinal de la cheville (1, 200) et la cheville se contractant simultanément par effet de traction appliqué à l'encontre de la direction d'insertion et la contraction étant réalisée par une liaison adaptée entre le dispositif de maintien et la cheville, qui est conçue de façon telle, qu'une rotation du dispositif de maintien (10, 215, 223) autour de l'axe longitudinal de la cheville (1, 200) provoque un déplacement relatif de ces pièces en direction longitudinale de la cheville.

2. Système de cheville selon la revendication 1,
**caractérisé en ce que** sur son extrémité de tête, la cheville est munie d'un filet et le dispositif de maintien est muni d'un contre-filet correspondant.

3. Système de cheville selon la revendication 2,
**caractérisé en ce que** le filetage est conçu sur l'extrémité de tête de la cheville sous la forme d'un filetage (4) mâle et le contre-filet (19; 119) est conçu dans le pied du dispositif de maintien.

4. Système de cheville selon la revendication 3,
**caractérisé en ce que**
le contre-filet (119) est disposé dans un écrou (31) déplaçable, disposé dans un trou oblong (170) prévu sur le côté du pied du dispositif de maintien (10).

5. Système de cheville selon la revendication 4,
**caractérisé en ce que** l'écrou (31) est enclenché dans des évidements (22) sur des saillies intérieures (23) complémentaires du trou oblong (117).

6. Système de cheville selon la revendication 4 ou 5,
**caractérisé en ce que** dans sa position de montage, l'écrou (31) est déporté vers l'arrière à l'intérieur, par rapport à la surface d'appui (24) du dispositif de maintien (10).

7. Système de cheville selon la revendication 2,
**caractérisé en ce que** le filet est conçu sur l'extrémité de tête de la cheville, en tant que taraudage et **en ce que** le dispositif de maintien comporte un filetage mâle correspondant, en tant que contre-filet.

8. Système de cheville selon la revendication 1,
**caractérisé en ce que** la cheville comporte sur son extrémité de tête un alésage intérieur s'étendant le long de son axe longitudinal, avec des nervures longitudinales.

9. Système de cheville selon la revendication 3,
**caractérisé en ce que** la tige de la cheville (103) comporte un point faible théorique (110) sous la goupille filetée avec filetage mâle.

10. Système de cheville selon la revendication 3,
**caractérisé en ce que** le contre-filet est constitué d'un tronçon de filet semi-circulaire (19).

11. Système de cheville selon la revendication 1,
**caractérisé en ce que** sur son extrémité de tête (204), la cheville (200) comporte au moins deux cames (213, 214) et **en ce que** le dispositif de maintien (215, 223) est muni d'un trou conçu sous la forme d'un trou oblong (216), pour l'insertion de la cheville, de façon à ce que par rotation du dispositif de maintien, la cheville (200) se déplace à partir de sa première position abaissée dans le trou oblong dans une deuxième position relevée par déplacement des cames sur le bord des côtés longitudinaux (218a, b) du trou oblong.

12. Système de cheville selon la revendication 11,
**caractérisé en ce que** sous la tête de cheville, les deux cames opposées (213, 214) sont conçues avec une section transversale semi-circulaire, dont l'extension en longueur est inférieure ou sensiblement ajustée à la longueur du trou oblong (216) ménagé dans le dispositif de maintien, mais pourtant supérieure à la largeur du trou oblong.
**en ce que** la tête de cheville (212) comporte sous la forme d'une bride un diamètre nominal supérieur à la largeur du trou oblong,
**en ce que** le trou oblong (216) est muni sur sa profondeur de nervures (219a, b) qui sont formées de façon telle que la tige de la cheville (211) est maintenue de façon rotative au centre du trou oblong, pour que lors de l'insertion de la cheville préalablement montée dans l'alésage, ses cames plongent jusqu'à la butée de la tête sur le bord des côtés longitudinaux du trou oblong et **en ce que** lors du montage, les cames se déplacent par rotation du dispositif de maintien, de préférence de 90° sur le bord des côtés longitudinaux du trou oblong dans la position relevée.

13. Système de cheville selon la revendication 11,
**caractérisé en ce que** pour la création des cames, un écrou peut être vissé sur la cheville munie d'un filetage mâle.

14. Système de cheville selon l'une quelconque des revendications 2, 3, 9 et 10, comprenant la cheville (1) avec sa goupille filetée sous la forme d'un filet trapézoïdal, ainsi que le collier de câble (10), avec un trou ménagé dans la base du collier qui comporte le tronçon de filetage semi-circulaire (19), le collier de câble étant muni d'une surface d'appui, constituée de deux crampons opposés (13a, 13b) en forme de lamelles en U.

15. Système de cheville selon la revendication 11 ou 12, comprenant la cheville (200), ainsi que l'étrier porte-câble (215, 223), avec le trou oblong (216) ménagé en son centre ou du côté de son extrémité, l'étrier porte-câble étant muni de béquilles (221a, b) et d'éléments de relèvement (220a, b) qui s'éloignent sous forme acutangle du fond, pour relever l'étrier respectif à l'état contracté et pour l'insertion du câble (222).
